(19) Europäisches Patentamt
European Patent Office
Office européen des brevets

(11) Veröffentlichungsnummer: **0 326 982 A2**

# (12) EUROPÄISCHE PATENTANMELDUNG

(21) Anmeldenummer: **89101526.5**

(22) Anmeldetag: **30.01.89**

(51) Int. Cl.4: **G01N 21/64 , G01N 31/22**

(30) Priorität: **03.02.88 DE 3803142**

(43) Veröffentlichungstag der Anmeldung: **09.08.89 Patentblatt 89/32**

(84) Benannte Vertragsstaaten: **DE FR GB NL SE**

(71) Anmelder: **Battelle-Institut e.V.**
**Am Römerhof 35 Postfach 900 160**
**D-6000 Frankfurt/Main 90(DE)**

(72) Erfinder: **Diehl, Wolfgang, Dipl.-Ing.**
**Eptingweg 1**
**D-6000 Frankfurt/Main(DE)**
Erfinder: **Hepp, Monika, Dr.**
**Rappmühlstrasse 54**
**D-6018 Weiterstadt 3(DE)**

(74) Vertreter: **Sartorius, Peter, Dipl.-Ing.**
**Battelle-Institut e.V. Abteilung Patente Am Römerhof 35**
**D-6000 Frankfurt am Main 90(DE)**

## (54) Verfahren zum Nachweis von Kampfstoffen.

(57) Die Erfindung betrifft eine Verfahren zum Nachweis von Kampfstoff oder kampfstoffgemischen, wobei ein fluoreszenzfähiges Nachweismittel mit dem Kampfstoff in Berührung gebracht wird, das mit dem Kampfstoff derart reagiert, das sich das von ihm ausgesandte Fluoreszenzlicht ändert.

Erfindungsgemäß wird ein Nachweismittel verwendet, dessen Logarithmus der Säurekonstanten im elektronischen Grundzustand und dessen Logarithmus der Säurekonstanten im elektronisch angeregten, emissionsfähigen Zustand um mehr als zwei differieren und dessen protolytische Form in einem organischen Lösungsmittel bei einer anderen Wellenlänge fluoresziert als dessen protolytische Form in Wasser und das in einem Lösungsmittel gelöst bzw. dispergiert ist, das mit dem Kampfstoff nicht mischbar ist.

Die Vorteile der Erfindung liegen insbesondere darin, daß ein breites Spektrum von Kampfstoffen mit dem erfindungsgemäßen Verfahren berührungsfrei nachgewiesen werden kann.

EP 0 326 982 A2

# Verfahren zum Nachweis von Kampfstoffen

Die Erfindung betrifft ein Verfahren zum Nachweis von Kampfstoff oder Kampfstoffgemischen, bei dem ein fluoreszenzfähiges Nachweismittel mit dem Kampfstoff in Berührung gebracht wird, wobei sich das von ihm ausgesandte Fluoreszenzlicht ändert.

Ein solches Verfahren wird bereits in der DE-OS 33 44 700 beschrieben. Dort beruht der Nachweis auf der Aduktbildung eines Triphenylmethin-Farbstoffes mit dem betreffenden Kampfstoff. Dabei wird die Nachweisreaktion mit einer nukleophilen oder elektrophilen Reaktion des Kampfstoffes an einem reaktiven Zentrum des Farbstoffes oder mit einer Konformationsänderung des Farbstoffes durch adsorptive Anbindung des Kampfstoffes an das Farbstoffmolekül erklärt.

Nach diesem bekannten Verfahren lassen sich aber als Kampfstoffe nur S-L$^{OST}$ (Bis-(2-chloräthyl)-sulfid)oder N-LOST (Bis-(2-chloräthyl)-imin) nachweisen. Ein Nachweis des ebenfalls wichtigen Kampfstoffes VX (chemischer Name: o-Alkyl-S-(N,N-dialkylàminoäthyl)-alkylthiol-phosphat) ist mit diesem bekannten Verfahren indessen nicht möglich.

Die DE-PS 29 47 459 beschreibt ein Verfahren zum in-situ-Nachweis von Niederschlägen spezieller, seßhafter Kampfstoffe aus der Gruppe der Phosphorsäureester. Diese Verbindungen zeigen eine Chemielumineszenz unter Einsatz von Indol, die berührungslos mittels eines optischen Detektors nachgewiesen werden kann. Für den Kampfstoff LOST versagt jedoch diese Reaktion. Für den Kampfstoff VX ist der Zusatz von Silberfluorid als Aktivator fast immer unabdingbar beim Nachweis mittels Indol. Einige Chargen lassen sich allerdings auch ohne Aktivator mit Indol nachweisen.

Das hierbei verwendete Silberfluorid ist aber teuer und macht, insbesondere durch stark streuende Proben bei der Anwendung Probleme.

Ausgehend von diesem bekannten Stand der Technik ist es Aufgabe der vorliegenden Erfindung, diese vorstehend genannten Nachteile zu vermeiden und ein Verfahren zu schaffen, mit dem in einwandfreier Art und Weise der Nachweis nicht nur von S-LOST und N-LOST sondern auch von VX, Lewisit, Soman, Tabun und Sarin möglich ist. Gegebenenfalls können diese Kampfstoffe auch in sogenannter verdickter Form, d.h. gemischt mit Polymeren oder Polykondensaten verschiedener Zusammensetzung und Molekülgrößen wie beispielsweise Kautschuk oder anderer gummihaltiger Materialien , wodurch die Kampfstoffe besondere Seßhaftigkeit erlangen und ihre Verdampfungsrate drastisch herabgesetzt wird, nachgewiesen werden.

Zur Lösung dieser Aufgabe ist das erfindungsgemäße Verfahren dadurch gekennzeichnet, daß ein Nachweismittel verwendet wird, dessen Logarithmus der Säurekonstanten im elektronischen Grundzustand und dessen Logarithmus der Säurekonstanten im elektronisch angeregten, emissionsfähigen Zustand um mehr als zwei differieren und dessen protolytische Form in einem organischen Lösungsmittel bei einer anderen Wellenlänge fluoresziert als dessen protolytische Form in Wasser und das in einem Lösungsmittel gelöst ist, das mit dem Kampfstoff oder den Kampfstoffen nicht mischbar ist, oder daß ein Nachweismittel verwendet wird, das sich in Wasser mit maximal 20 % organischen Zusätzen nicht löst, sondern nur dispergiert werden kann, wobei es nicht fluoresziert, bei Kontakt mit einem oder mehreren Kampfstoffen jedoch in die Kampfstoffphase diffundiert, sich dort löst und eine charakteristische Fluoreszenz entwickelt.

Der Kern der Erfindung ist somit darin zu sehen, daß als Nachweismittel ein chemisch-physikalisches Reagenz verwendet wird, das in einer möglichen protolytischen Form eine von Null verschiedene Löslichkeit in den Kampfstoffen bzw. in der Grenzschicht zwischen Kampfstoff und dem Lösungs- bzw. Dispergiermittel des Nachweismittels (im allgemeinen Wasser) hat und das in der Kampfstoffphase bei einer anderen Wellenlänge bzw. mit einer anderen Quantenausbeute, in der Regel mit einer sehr viel höheren Quantenausbeute, fluoresziert als in der Lösungsmittel- bzw. Dispergiermittelphase.

Die Änderung des Fluoreszenzlichtes ist also eine Wellenlängenänderung oder eine Änderung der Quantenausbeute.

Hierbei muß jedoch darauf hingewiesen werden, daß es sich nicht um eine Frequenzverschiebung der Emission aufgrund der Polarität des Lösungsmittels handelt, sondern die Änderung der Emission nach Freqzenzlage und/oder Quantenausbeute auf dem Auftreten unterschiedlicher Molekülspezies (in der Regel verschiedene Protolysestufen des gleichen Nachweismittels) in der Kampfstoff- und der wäßrigen Phase oder auf einer Änderung des Aggregatzustandes (in der Regel vom festen Zustand in der wäßrigen zum gelösten Zustand in der Kampfstoffphase) beruht.

Zweckmäßig wird als Nachweismittel eine Substanz verwendet, deren Fluoreszenz von der Lage der Säurekonstantwerte im Grundzustand zu den Säurekonstantwerten im angeregten Zustand, von dem Aggregationsverhalten im wäßrigen und im organischen Solvens und von der Beeinflussung der nichtbindenden und der bindenden Molekülorbitale durch die Art des Solvens abhängt.

Bevorzugte Anwendung als Nachweismittel findet eine Substanz, deren Fluoreszenzverhalten von der

Lage der Säurekonstante (pKs) im nicht angeregten elektronischen Grundzustand relativ zur Lage der Säurekonstante im elektronisch angeregten Zustand ($pK^*$) oder vom Löseverhalten im Kampfstoff relativ zum Löseverhalten (in der Regel der Nichtlöslichkeit) in wäßrigen Phasen abhängt.

Demzufolge wird zweckmäßig ein Nachweismittel verwendet, dessen Löslichkeit in organischen Lösungsmitteln hoch ist, das in Wasser aber nur als Dispersion eines ungelösten Stoffes vorliegt und das in einem Lösungsmittel gelöst oder dispergiert ist, das mit dem Kampfstoff nicht mischbar ist.

Bevorzugtes Lösungs- bzw. Dispergiermittel für das Nachweismittel ist Wasser oder ein schwer entflammbares Gemisch aus Wasser mit maximal 20 Gew.-% eines organischen Lösungsmittels. Besonders bevorzugt wird als organisches Lösungsmittel Äthylalkohol.

Die Nachweisstoffe werden vorzugsweise aus wäßriger Lösung in $10^{-3}$ bis $10^{-2}$ molarer Konzentration auf die betreffende Oberfläche, beispielsweise durch Sprühen auf gebracht, auf der der Kampfstoff vermutet wird.

Erfindungsgemäß können alle Nachweismittel verwendet werden, die in der Grenzschicht von Kampfstoff, beispielsweise LOST oder VX, zur Phase des Lösungsmittels des Nachweismittels (Wasserphase) gelöst werden bzw. sich dort anreichern und die in dieser Grenzschicht bzw. in der reinen Kampfstoffphase ein gegenüber der Lösungsmittelphase (Wasserphase) verändertes Fluoreszenzverhalten aufweisen. Eine Einschränkung bezüglich Anregungs- und Emissionswellenlänge besteht nicht. Die untersuchten Stoffe decken das gesamte Spektrum des sichtbaren Lichtes ab.

Bevorzugte Anwendung als Nachweismittel finden 6-Aminochinolin, 5-Aminochinolin sowie die Farbstoffe Fluorol 086 oder Fluorol 088 (Hersteller dieser Farbstoffe ist die Firma BASF AG.).

Wie vorstehend bereits erwähnt, können mit dem erfindungsgemäßen Verfahren einzelne Kampfstoffe oder aber auch Gemische von Kampfstoffen in einfacher Weise berührungsfrei nachgewiesen werden.

Die Nachweismöglichkeit erstreckt sich dabei über einen außerordentlich großen Temperaturbereich und ist problemlos von -20 °C bis etwa +80 °C durchführbar. Die tiefe Temperatur wird erreicht weil der organ. Anteil gefrierpunkterniedrigend wirkt. Anhand der nachfolgenden Ausführungsbeispiele wird das erfindungsgemäße Verfahren unter Verwendung von 6-Aminochinolin einerseits und Fluorol 088 andererseits als Nachweisstoffe im einzelnen näher erläutert. Die Nachweisstoffe wurden in $10^{-3}$ molarer wäßriger Dispersion auf die mit Kampfstoffen verseuchte Fläche aufgebracht. Als Anregungslichtquelle wurde eine Xenon-Bogenlampe verwendet, die mit dem Filter Schott UG 11 bestückt war.

In der nachfolgenden Tabelle sind die jeweils festgestellten Fluoreszenzwellenlängen der Nachweismittel mit den jeweiligen Kampfstoffen aufgeführt.

| Kampfstoff | 6-Aminochinolin Fluoreszenzwellenlängen in nm | Fluorol 088 Fluoreszenzwellenlängen in nm |
|---|---|---|
| S-LOST | 450 | 530 bis 560 |
| Lewisit | 440-510 | 480 bis 580 |
| Soman | 450 | 530 bis 560 |
| VX | 450 | 520 bis 555 |
| ohne Kampfstoff | 532 | keine Fluoreszenz |

Die in der vorstehenden Beschreibung lediglich in Form ihrer Handelsnamen aufgeführten Kampfstoffe besitzen die folgende chemische Bezeichnung bzw. Konfiguration:

Lewisit: Chlorvinylarsindichlorid

Tabun:

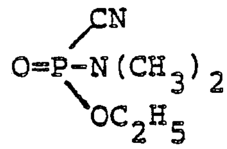

Soman:

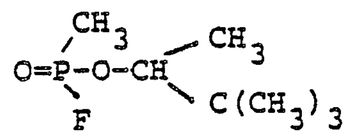

Sarin:

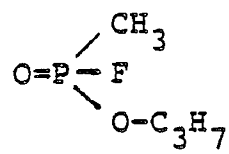

Die in der vorstehenden Beschreibung genannten Nachweisstoffe Fluorol 086 und Fluorol 088 haben die folgende Konfiguration:

Fluorol 086

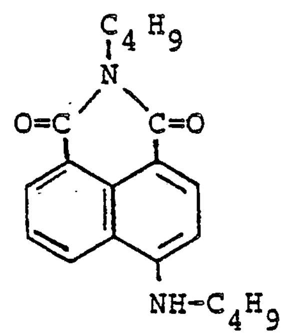

Fluorol 088

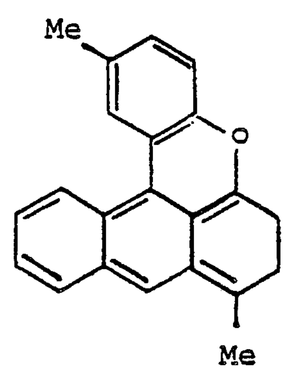

## Ansprüche

1. Verfahren zum Nachweis von Kampfstoff oder Kampfstoffgemischen, bei dem ein fluoreszenzfähiges Nachweismittel mit dem Kampfstoff in Berührung gebracht wird, wobei sich das von ihm ausgesandte Fluoreszenzlicht ändert ,
**dadurch gekennzeichnet,**
daß ein Nachweismittel verwendet wird, dessen Logarithmus der Säurekonstanten im elektronischen Grundzustand und dessen Logarithmus der Säurekonstanten im elektronisch angeregten, emissionsfähigen Zustand um mehr als zwei differieren und dessen protolytische Form in einem organischen Lösungsmittel bei einer anderen Wellenlänge fluoresziert als dessen protolytische Form in Wasser und das in einem Lösungsmittel gelöst bzw. dispergiert ist, das mit dem Kampfstoff nicht mischbar ist.

2. Verfahren zum Nachweis von Kampfstoff oder Kampfstoffgemischen, bei dem ein fluoreszenzfähiges Nachweismittel mit dem Kampfstoff in Berührung gebracht wird, wobei sich das von ihm ausgesandte Fluoreszenzlicht ändert,
**dadurch gekennzeichnet,**
daß ein Nachweismittel verwendet wird, dessen Löslichkeit in organischen Lösungsmitteln hoch ist, das in Wasser aber nur als Dispersion eines ungelösten festen Stoffes vorliegt und das in einem Lösungsmittel gelöst oder dispergiert ist, das mit dem Kampfstoff nicht mischbar ist.

3. Verfahren nach Anspruch 1 oder 2 ,
**dadurch gekennzeichnet,**
daß als Lösungsmittel bzw. Dispergiermittel für das Nachweismittel ein schwer entflammbares Gemisch aus Wasser mit maximal 20% organischem Lösungsmittel verwendet wird.

4. Verfahren nach einem oder mehreren der Ansprüche 1 bis 3 ,
**dadurch gekennzeichnet,**
daß $1 \times 10^{-3}$ bis $1 \times 10^{-2}$ molare Lösungen bzw. Dispersionen des Nachweismittels in wäßriger oder wäßrig organischer Lösung bzw. Dispersion zum Nachweis verwendet werden.

5. Verfahren nach einem der Ansprüche 1, bis 4 ,
**dadurch gekennzeichnet,**
daß als Nachweismittel 6-Aminochinolin verwendet wird.

6. Verfahren nach einem der Ansprüche 1 bis 4 ,
**dadurch gekennzeichnet,**
daß als Nachweismittel Fluorol 086 oder Fluorol 088 verwendet wird.

7. Verfahren nach einem oder mehreren der Ansprüche 1 bis 6 ,
**dadurch gekennzeichnet,**
daß der Nachweis im Temperaturbereich zwischen -20° C und +80° C durchgeführt wird.